# DEMANDE DE BREVET EUROPEEN

(11) **EP 0 814 014 A1**
(43) Date de publication de la demande: **29.12.1997**
(21) Numéro de dépôt: 97401379.9
(22) Date de dépôt: 17.06.1997
(51) Int. Cl.: B62H 3/00

(54) **Dispositif de garage antivol pour cycle**

(30) Priorité: 17.06.1996 FR 9607490
(71) Demandeur: Etablissements Senechal et Fils, 59158 Mortagne du Nord (FR); Duhayer, Laurent, 71510 Charrecey (FR)
(72) Inventeur: Duhayer, Laurent, 71100 Chalons sur Saône (FR)
(74) Mandataire: Martin, Jean-Jacques

(57) **Abrégé**

La présente invention concerne un dispositif de garage antivol pour un cycle.

Ce dispositif (2) comporte une fente verticale (14) dans laquelle on engage la roue avant (9) du cycle et une fourchette (26) susceptible d'occuper une position d'immobilisation de celui-ci, dans laquelle elle s'emboîte de haut en bas sur le cadre (3) du cycle, directement en arrière du tube de direction (4) de celui-ci, ou sur la potence (10) du guidon (7) du cycle (1), en arrière du guidon (7), en offrant au cycle (1) une butée bilatérale et vers le haut. La fourchette (26) peut également occuper une position de libération du cycle (1), dans laquelle elle est suffisamment décalée vers le haut pour dégager le cycle (1) au moins vers l'arrière. Des moyens de verrouillage (32, 37, 42) permettent de verrouiller la fourchette (26) en position d'immobilisation par rapport aux joues (13).

## Description

La présente invention concerne un dispositif de garage pour un cycle reposant sur le sol dans une position déterminée correspondant au moins approximativement à une position de circulation en ligne droite, ledit dispositif comportant deux joues plates, verticales, solidaires du sol ou susceptibles d'en être rendues solidaires et définissant entre elles une fente présentant un plan moyen vertical pour recevoir une partie antérieure de la roue avant du cycle occupant ladite position déterminée.

Dans ce qui précède comme dans ce qui suit, les notions d'avant et d'arrière s'entendront par référence au sens normal de circulation du cycle, et l'on entendra par "position de circulation en ligne droite" une position dans laquelle le plan moyen de la roue avant coïncide avec celui du cadre et de la roue arrière et le guidon est orienté perpendiculairement à ce plan moyen.

Actuellement, les dispositifs de garage pour cycle du type indiqué en préambule sont le plus souvent réalisés sous la forme d'un bloc de béton qui définit les deux joues et dont la fente est propre à recevoir le pneu et la jante de la roue avant du cycle sur environ la moitié inférieure de la partie antérieure de cette roue, ou sous la forme d'une structure tubulaire, groupant généralement plusieurs paires de joues sur un même support, chaque fente étant alors propre à recevoir la partie antérieure de la roue avant d'un cycle sur une proportion plus ou moins importante de sa hauteur, à un niveau intermédiaire de la roue.

Le premier de ces modes de réalisation actuellement connus présente un inconvénient en ce qu'il est pratiquement impossible d'y prévoir des dispositions permettant d'y attacher le cycle pour éviter son vol, si bien que la sécurité antivol ne peut être assurée que par un dispositif porté par le cycle lui-même, comme un antivol de direction ou un antivol à lien que l'on engage entre les rayons d'une roue, ce qui n'empêche en aucune façon un voleur d'emporter le cycle s'il n'a pas le temps d'enlever l'antivol sur place, pour enlever ensuite cet antivol dans un endroit discret. En outre, le cycle n'étant retenu latéralement, c'est-à-dire à l'encontre d'une chute, que par une faible partie de sa roue avant, toute sollicitation tendant à la faire tomber, qu'il s'agisse de son propre poids, en équilibre instable, ou encore du vent ou d'un choc accidentel, risque de provoquer un vrillage, généralement irréparable, de la roue avant.

Le mode de réalisation tubulaire présente également cet inconvénient, même s'il est amoindri du fait que la fente épouse la roue plus haut. Par contre, cet autre mode de réalisation présente par rapport au précédent l'avantage de permettre de lier la roue avant du cycle à la structure tubulaire au moyen d'un antivol traditionnel, à lien souple tel qu'un câble ou une chaîne susceptibles d'être fermés par serrure ou à lien rigide tel qu'un cadenas, mais il n'est pas rare qu'un voleur démonte la roue avant pour emporter le reste du cycle en laissant cette roue avant sur place.

Pour tenter de remédier à ces inconvénients, on a proposé dans US-A-3 920 126 de perfectionner un dispositif du type indiqué en préambule, en articulant sur les joues une fourchette susceptible d'évoluer ainsi, par rapport aux joues, entre au moins une position d'immobilisation du cyle, dans laquelle elle est tournée vers le bas et symétrique par rapport au plan moyen de façon à pouvoir s'emboîter de haut en bas sur le cadre du cycle, directement en arrière du tube de direction, en offrant au cycle une butée bilatérale alors que le cycle occupe ladite position déterminée, et une position de libération du cycle, dans laquelle elle est suffisamment décalée vers le haut, par rapport à la position d'immobilisation, pour dégager le cycle au moins vers l'arrière.

Dans sa position d'immobilisation du cycle, la fourchette est verrouillée sur le cadre de celui-ci par un cadenas, ce qui s'oppose au vol du cadre mais pas à celui des roues. En effet, il reste possible de lever le cycle en accompagnant ce mouvement d'un dégagement de la roue avant par rapport aux joues, c'est-à-dire de placer le cycle dans une position permettant le démontage et le vol de ses roues.

Pour pallier ce risque, il est en outre prévu, dans US-A-3 920 126, de relier les roues et le cadre à la fourchette au moyen d'une chaine ou d'un câble qui peut remplacer le cadenas dans sa fonction de verrouillage de la fourchette sur le cadre ou venir en sus, mais la prévision d'une telle chaine ou d'un tel câble complique le dispositif, c'est-à-dire le rend à la fois coûteux et vulnérable au vandalisme, et réduit sa commodité d'utilisation.

Le but de la présente invention est de remédier à ces inconvénients et, à cet effet, la présente invention propose un dispositif du type indiqué en préambule, comportant comme l'enseigne US-A-3 920 126 une fourchette montée mobile par rapport aux joues entre au moins une position d'immobilisation du cycle, dans laquelle elle est tournée vers le bas et symétrique par rapport au plan moyen de façon à pouvoir s'emboîter de haut en bas sur le cadre du cycle, directement en arrière du tube de direction, ou sur la potence du guidon, derrière celui-ci, en offrant au cycle une butée bilatérale alors que le cycle occupe ladite position déterminée, et une position de libération du cycle, dans laquelle elle est suffisamment décalée vers le haut, par rapport à la position d'immobilisation, pour dégager le cycle au moins vers l'arrière, et caractérisé en ce qu'il comporte en outre des moyens de verrouillage déverrouillable de la fourchette par rapport aux joues dans la position d'immobilisation du cycle, de telle sorte que la fourchette offre au cycle une butée également vers le haut dans cette position d'immobilisation du cycle.

Un Homme du métier comprendra aisément que, dans le cas d'un dispositif selon l'invention comme dans le cas du dispositif décrit dans US-A-3 920 126, la fente ne joue qu'un rôle secondaire dans la retenue du cycle à l'encontre d'une chute lorsque la fourchette occupe sa position d'immobilisation du cycle, et que ce rôle est essentiellement assuré par la fourchette, coopérant à cet effet avec le cadre ou avec la potence du guidon, si bien que la tendance du cycle à tomber, naturelle ou accrue par le vent ou par un choc, ne risque pas de se traduire par un vrillage de la roue avant.

En outre, compte tenu de la conformation habituelle, bien connue, des cycles, et notamment du fait que le tube de direction est traditionnellement incliné de telle sorte que l'axe de rotation de la roue avant par rapport à la fourche soit décalé vers l'avant par rapport au guidon, la butée que la fourchette offre au cycle vers le haut en position d'immobilisation du cycle, soit directement par appui de la fourchette, vers le bas, sur le cadre du cycle en arrière de ce tube ou sur la potence du guidon, ou encore indirectement par appui, sur le guidon lui-même, d'un bras solidaire de la fourchette et s'étendant alors vers l'avant à partir d'elle comme il apparaîtra plus loin, dans le cas du dispositif selon l'invention, empêche à la fois de lever le cadre pour séparer la roue avant de la fourche et de faire basculer ce cadre, avec roulement de la roue avant sur le sol, en levant la roue arrière, pour dégager le cycle lorsque la fourchette occupe sa position d'immobilisation de celui-ci. La retenue latérale assurée quant à elle d'une part par le dessus du cadre ou la potence du guidon, par la fourchette, et d'autre part au niveau de la roue avant, par les joues bordant la fente de réception de celle-ci, empêche de faire basculer latéralement le cycle en faisant riper la roue avant sur le sol pour dégager le cadre de la fourchette. Il en résulte que le dispositif selon l'invention offre une sécurité considérablement accrue à l'encontre du vol, sans que l'on ait besoin d'avoir recours à des moyens accessoires tels qu'une chaine ou un câble reliant le cadre et les roues.

Divers modes de montage de la fourchette par rapport aux joues peuvent être adoptés, pour autoriser les mouvements de la fourchette entre sa position de libération du cycle et sa position d'immobilisation de celui-ci, au nombre d'au moins une. On pourrait par exemple envisager à cet effet un montage au coulissement vertical, ou encore une réalisation de la fourchette sous forme de deux mâchoires susceptibles de s'écarter mutuellement par exemple par basculement latéral, chacune de son côté, et de se rapprocher pour saisir le cadre mais on préfère un mode de réalisation selon lequel la fourchette est articulée par rapport aux joues, entre ses positions d'immobilisation et de libération du cycle, autour d'un axe d'articulation qui est perpendiculaire au plan moyen.

Alors, on prévoit avantageusement que ledit axe d'articulation soit décalé vers l'avant par rapport à la fourchette, en position d'immobilisation du cycle, et que la fourchette soit solidaire d'un bras disposé selon le plan moyen, susceptible de chevaucher le guidon du cycle occupant ladite position déterminée, en position d'immobilisation du cycle, et articulé autour dudit axe d'articulation par rapport aux joues entre une position haute de la fourchette et au moins une position basse de la fourchette, définissant respectivement lesdites positions de libération et d'immobilisation, ce qui permet d'offrir une large gamme de positions possibles d'immobilisation d'un cycle, en fonction de la conformation de celui-ci, par adaptation du niveau auquel la fourchette se trouve par rapport au sol en fonction de la hauteur du cadre et du guidon de chaque cycle, et d'assurer en même temps que la fourchette puisse occuper une position de libération compatible avec une large gamme de dimensions de cycles. L'axe d'articulation est avantageusement disposé à un niveau légèrement supérieur à celui des guidons des cycles les plus répandus, de telle sorte qu'en position d'immobilisation d'un cycle, quelles que soient les dimensions de ce cycle dans une large gamme de possibilités, le bras occupe une orientation plus ou moins proche de l'horizontale, en montant ou en descendant selon le cas à partir de l'axe d'articulation et vers la fourchette.

Lorsque la fourchette est ainsi susceptible d'occuper par rapport aux joues plusieurs positions d'immobilisation d'un cycle, adaptées à des cycles de forme et/ou de taille différentes, on prévoit corrélativement que les moyens de verrouillage déverrouillable de la fourchette soient susceptibles de verrouiller celle-ci par rapport aux joues dans chacune de ses positions d'immobilisation d'un cycle.

On observera que le fait que le verrouillage de la fourchette s'effectue par rapport aux joues et non par rapport au cadre du cycle, contrairement à ce que propose US-A-3 920 126, offre l'avantage d'autoriser le verrouillage quelle que soit la conformation du cadre, alors qu'un verrouillage de la fourchette sur le cadre peut être rendu impossible par la conformation de ce dernier.

Les moyens de verrouillage déverrouillable de la fourchette peuvent également être choisis dans une large gamme de possibilités et, notamment, agir au niveau de l'axe d'articulation mais on préfère un mode de réalisation selon lequel les moyens de verrouillage comportent d'une part un étrier solidaire de la fourchette, comportant deux branches mutuellement symétriques par rapport audit plan moyen de façon que l'étrier puisse chevaucher les joues, par l'extérieur de la fente, dans la position d'immobilisation, chaque branche étant percée d'un trou et les trous des deux branches étant placés suivant un même axe perpendiculaire audit plan moyen et sécant des joues dans la position d'immobilisation, et d'autre part au moins une paire de trous aménagés respectivement dans l'une et l'autre joues, suivant un même axe perpendiculaire audit plan moyen, sécant de la fente et avec lequel l'axe des trous des branches coïncide au moins approximativement en position d'immobilisation, de telle sorte que l'on puisse engager un antivol de type connu à travers la fente, entre les rayons de la roue avant du cycle, par lesdits trous au moins approximativement coaxiaux en position d'immobilisation. Lorsque la fourchette est articulée par rapport aux joues par l'intermédiaire d'un bras, l'étrier est avantageusement monté sur celui-ci, entre la fourchette et l'axe d'articulation.

Une telle conception des moyens de verrouillage permet à chacun d'utiliser son propre antivol, à lien souple ou rigide, choisi selon ses préférences. Elle permet en outre de simplifier le dispositif selon l'invention, c'est-à-dire d'en réduire les coûts de fabrication et de maintenance, les seuls composants restant en permanence sur site, exposés aux intempéries et au vandalisme, étant des composants mécaniquement simples et susceptibles d'être réalisés sous une forme particulièrement robuste. Pour faciliter l'utilisation d'antivols rigides présentant la forme de cadenas à anse en U, les joues portent de préférence au moins deux paires de trous, la paire de trous de l'étrier pouvant quant à elle rester unique dès lors qu'il ne paraît pas indispensable que l'anse du cadenas traverse deux fois chaque branche de l'étrier.

Une telle conception des moyens de verrouillage est compatible avec la prévision de plusieurs positions d'immobilisation d'un cycle puisqu'il est possible de prévoir, lorsque les joues portent plusieurs paires de trous de réception d'un antivol de type connu, que les axes respectifs de ces paires de trous soient placés sur un cylindre de révolution autour de l'axe d'articulation, notamment en étant équidistants angulairement autour de cet axe d'articulation pour permettre l'utilisation d'un antivol sous forme d'un cadenas à anse en U.

On peut également prévoir que les axes respectifs des paires de trous des joues soient ainsi répartis sur plusieurs, par exemple deux, cylindres de révolution autour de l'axe d'articulation, auquel cas chaque branche de l'étrier comporte autant de trous que de cylindres, ces trous étant alignés d'une branche à l'autre suivant des axes perpendiculaires audit plan moyen et susceptibles de coïncider respectivement avec l'axe de l'une ou l'autre des paires de trous des joues pour définir les différentes positions d'immobilisation.

D'autres caractéristiques et avantages du dispositif selon l'invention ressortiront de la description ci-dessous, relative à un exemple non limitatif de réalisation, ainsi que des dessins annexés qui font partie intégrante de cette description.

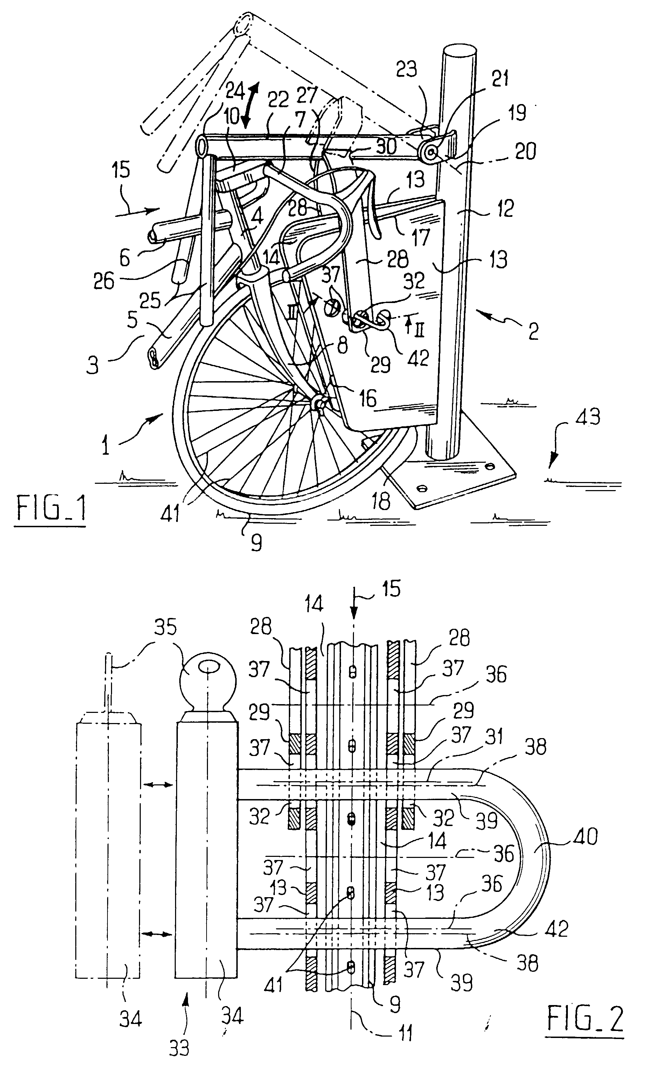

- La figure 1 montre une vue en perspective d'un dispositif selon l'invention coopérant avec un cycle, la fourchette étant illustrée d'une part en trait plein, dans une position d'immobilisation de ce cycle, et d'autre part en trait mixte, dans une position de libération de celui-ci.
- La figure 2 montre une vue de détail du dispositif, en position d'immobilisation du cycle, en coupe selon un cylindre repéré en II-II à la figure 1, de révolution autour de l'axe d'articulation de la fourchette par rapport aux joues et passant par les axes des trous prévus dans ces dernières pour recevoir un antivol.

Sur ces figures, le cycle 1 avec lequel coopère le dispositif selon l'invention 2 est un vélo de course à cadre droit mais il est bien entendu qu'un dispositif 2 selon l'invention pourrait être associé à d'autres types de cycles, qu'il s'agisse de vélos d'un autre type, par exemple de vélos de ville ou de randonnée pour hommes, femmes ou enfants, ou encore de vélos tout terrain, ou qu'il s'agisse de cyclomoteurs ou de vélomoteurs, le cas échéant moyennant une adaptation de formes et de dimensions relevant des aptitudes normales d'un Homme du métier.

Le cycle 1 n'a pas été illustré dans son intégralité, et la figure 1 en montre simplement, dans une position correspondant au moins approximativement à une position de circulation en ligne droite, dont on a désigné le sens normal par 15, une partie antérieure du cadre 3, composée d'un tube de direction 4 auquel se raccordent solidairement, dans cet exemple, un tube inférieur de cadre 5 menant vers l'arrière au pédalier, non représenté, et un tube supérieur de cadre 6 menant vers l'arrière à la selle, également non représentée, le guidon 7 disposé au-dessus du tube de direction 4 et, dans cet exemple, légèrement en avant de celui-ci, la fourche 8 disposée en dessous de celui-ci et dans son prolongement, et la roue avant 9, montée sur la fourche 8 et reposant sur le sol 43 au même titre que la roue arrière non représentée ; compte tenu du décalage du guidon 7 vers l'avant par rapport au tube de direction 4 dans cet exemple, le guidon 7 est fixé à un tube non représenté, prolongeant la fourche 8 à l'intérieur du tube de direction 4, par une potence 10 disposée au-dessus de celui-ci, étant bien entendu que le dispositif selon l'invention 2 peut également coopérer avec des cycles dont le guidon 7 se raccorde directement, au-dessus du tube de direction 4, au tube prolongeant la fourche 8 à l'intérieur de celui-ci. Dans cette position de circulation en ligne droite, le cycle est dressé sur ses deux roues et présente un plan moyen 11 approximativement vertical qui est alors commun au cadre et aux deux roues, auquel le guidon 7 est perpendiculaire et qui constitue également un plan moyen de symétrie pour le dispositif selon l'invention 2 lorsque le cycle 1 coopère avec celui-ci, si bien que l'on conservera la même référence numérique 11 pour désigner indistinctement le plan moyen de symétrie du cycle 1 dans sa position de circulation en ligne droite, dans laquelle il coopère avec le dispositif selon l'invention 2, et le plan moyen de symétrie de ce dispositif selon l'invention 2.

Dans cet exemple non limitatif, celui-ci est prévu en un seul exemplaire sur un poteau rectiligne, vertical 12 présentant le plan 11 comme plan moyen de symétrie et ancré au sol 43 par tout moyen approprié, mais on pourrait prévoir plusieurs exemplaires du dispositif selon l'invention 2 sur le poteau 12, de même que l'on pourrait remplacer le poteau 12 par d'autres supports rigides, et notamment par le mur d'un bâtiment ou par une ou plusieurs pièces d'ancrage sur un tel mur, de façon non illustrée mais aisément concevable par un Homme du métier.

En porte-à-faux d'un même côté, le poteau 12 porte solidairement deux joues plates, verticales 13 mutuellement symétriques par rapport au plan 11 et par exemple réalisés en tôle d'acier soudée sur le poteau 12, lui-même avantageusement réalisé en acier de même que les autres composants du dispositif selon l'invention 2, bien que d'autres matériaux puissent être utilisés sans que l'on sorte pour autant du cadre de la présente invention.

Les deux joues 13 délimitent entre elles une fente 14 verticale, susceptible de recevoir une partie antérieure de la roue 9 du cycle 1, référence étant faite en sens normal 15 de circulation de celui-ci, inclus dans le plan 11. A cet effet, les joues 13 peuvent être mutuellement parallèles de façon à définir une fente 14 de largeur constante mais, de préférence et comme il est illustré, elles peuvent également diverger légèrement dans le sens d'un éloignement par rapport au poteau 12, c'est-à-dire en sens opposé au sens 15, de telle sorte que la fente 14 soit plus large dans ses zones les plus éloignées du poteau 12 que dans ses zones les plus proches de celui-ci, ce qui facilite l'engagement de la roue 9 dans le sens 15 à l'intérieur de la fente 14, entre les joues 13.

L'écartement mutuel de ces dernières perpendiculairement au plan 11, c'est-à-dire la largeur de la fente 14, est choisi pour être compatible avec la plupart des sections de pneumatiques susceptibles d'équiper des vélos, vélomoteurs ou cyclomoteurs, étant entendu qu'il y a lieu de considérer à cet égard la valeur minimale de cet écartement mutuel ou de cette largeur lorsque les joues 13 ne sont pas mutuellement parallèles, d'une part, et qu'il y a lieu que cet écartement mutuel ou cette largeur soit aussi proche que possible de la plus grande largeur de pneu possible par un cycle afin d'éviter, dans toute la mesure du possible, que la roue 9 ne puisse bouger latéralement une fois qu'elle est engagée dans la fente 14. Les caractéristiques dimensionnelles à choisir à cet égard ressortent des aptitudes normales d'un Homme du métier, en fonction d'une gamme déterminée de cycles à laquelle est plus particulièrement destiné le dispositif selon l'invention 2 ; à titre d'exemple non limitatif, la largeur minimale de la fente 14 peut être de l'ordre de 5 cm, pour un dispositif 2 exclusivement destiné à des vélos, à 15 cm environ, pour un dispositif 2 également destiné à des vélomoteurs ou cyclomoteurs.

De préférence, les joues 13 sont dimensionnées aussi largement que possible, de façon à couvrir latéralement une proportion aussi grande que possible de la partie antérieure de la roue 9. A cet effet, dans l'exemple illustré, chacune d'entre elles s'étend plus loin du poteau 12 dans une zone supérieure que dans une zone inférieure et est délimitée, dans le sens d'un éloignement par rapport au poteau 12, par un chant rectiligne respectif 16 s'écartant du poteau 12 de bas en haut, avec une inclinaison, par rapport à la verticale, du même ordre de grandeur de celle que présente le tube de direction 4, de façon bien connue d'un Homme du métier, de telle sorte que ce chant 16, qui constitue le chant arrière de la joue 13 considérée en référence au sens 15, longe la fourche 8 vers l'avant de celle-ci lorsque la roue 9 est engagée dans la fente 14. Vers le haut, chaque joue 13 est également délimitée par un chant rectiligne 17, lequel est toutefois horizontal et situé, par rapport au sol 43, à un niveau correspondant sensiblement au plus grand diamètre de roue 9 susceptible d'équiper un cycle, du moins dans une gamme considérée, c'est-à-dire de l'ordre de 75 cm, ce chiffre étant indiqué à titre d'exemple non limitatif. Ce chant supérieur 17 raccorde le poteau 12 au chant arrière 16 auquel il se raccorde par un arrondi. Vers le bas, chaque joue 13 est délimitée par un chant inférieur respectif 18 également rectiligne, légèrement ascendant du poteau 12 au chant arrière 16 auquel il se raccorde également par un arrondi. Dans sa zone la plus éloignée du sol 43, qui est également sa zone la plus éloignée du poteau 12, ce chant 18 est distant du sol 43 d'une distance inférieure au plus faible rayon possible de roue avant 9 dans la gamme de cycles considérée, et par exemple de l'ordre d'une vingtaine de centimètres.

Naturellement, les chiffres indiqués ci-dessus ne constituent que des exemples non limitatifs dont on pourra s'écarter sans sortir pour autant du cadre de la présente invention ; toutefois, ils sont actuellement préférés dans la mesure où ils permettent d'assurer une couverture latérale aussi bonne que possible de la partie antérieure de la roue 9 lorsqu'elle est engagée dans la fente 4.

A un niveau supérieur à celui des chants supérieurs 17 des joues 13, en porte-à-faux du même côté que celles-ci, c'est-à-dire vers l'arrière en référence au sens 15, le poteau 12 porte solidairement, par exemple par soudure, une chape 19 symétrique par rapport au plan 11 et portant elle-même de façon solidaire, suivant un axe 20 perpendiculaire à cet axe 11, un pivot d'articulation 21 sécant du plan 11. L'axe 20 est situé, par rapport au sol 43, à un niveau qui correspond approximativement au niveau moyen de la partie supérieure d'un guidon 7 ou d'une potence 18 de guidon 7 de cycle 1 en position de circulation en ligne droite, en étant de préférence supérieur de quelques centimètres à un tel niveau, et par exemple de l'ordre de 90 cm dans l'exemple illustré, étant entendu que d'autres valeurs pourraient être choisies sans que l'on sorte pour autant du cadre de la présente invention. L'axe 20 est par ailleurs situé à proximité immédiate du poteau 12.

Par l'intermédiaire du pivot 21 est articulé autour de l'axe 20, par rapport à la chape 19, au poteau 12 et par conséquent aux joues 13. un bras rectiligne 22 présentant comme plan moyen de symétrie le plan 11 et ainsi disposé au-dessus de la fente 14. Ce bras 22 présente une première extrémité 23 directement adjacente au poteau 12 et liée de façon permanente à celui-ci par l'intermédiaire du pivot 21 qui la traverse de part en part suivant l'axe 20, de façon non illustrée mais aisément compréhensible par un Homme du métier, dans des conditions propres à n'autoriser que le pivotement du bras 22 autour de l'axe 20 par rapport à la chape 19, sans ou pratiquement sans autre possibilité de mouvement relatif. Le bras 22 présente par ailleurs une deuxième extrémité 24, quant à elle libre et qui, du fait de ce guidage, peut monter ou descendre par pivotement du bras 22 autour de l'axe 20 par rapport à la chape 19, au poteau 12 et aux joues 13.

Le bras 22 est par exemple formé d'un tronçon de tube d'acier, ce qui lui assure une bonne rigidité sans entraîner un poids trop important.

A proximité immédiate de son extrémité libre 24, le bras 22 porte solidairement, par exemple par soudure, deux barres rectilignes 25, par exemple également formées d'un tronçon respectif de tube d'acier, dont chacune est orientée à 90° par rapport au bras 22 et qui sont mutuellement symétriques par rapport au plan 11 en formant entre elles un angle non référencé de l'ordre d'une trentaine de degrés, ce chiffre étant indiqué à titre d'exemple non limitatif. Dans la plupart des orientations que le bras 22 peut présenter du fait de son pivotement autour de l'axe 20 par rapport à la chape 19, et notamment lorsque le bras 22 occupe une position horizontale ou approximativement horizontale, comme on l'a illustré en trait plein à la figure 1, les deux barres 25 sont tournées vers le bas, et s'écartent mutuellement vers le bas, à partir de leur raccordement à l'extrémité 24 du bras 22, de façon à définir une fourchette 26 ouverte vers le bas, décalée vers l'arrière par rapport à l'axe 20, et verticale lorsque le bras 22 est horizontal ou approximativement verticale lorsque le bras 22 est approximativement horizontal.

Naturellement, la conformation du bras 22 et celle des barres 25 définissant la fourchette 26 pourraient être différentes d'une conformation rectiligne, notamment en fonction d'une adaptation à des types particuliers de cycles.

La longueur du bras 22 entre l'axe 20 et les barres 25 et la longueur de ces barres 25 à partir de leur raccordement au bras 22 sont choisies par l'Homme du métier, dans le cadre des aptitudes normales de celui-ci, de telle sorte que, quel que soit le cycle 1 entrant dans la gamme considérée et dès lors que la partie antérieure de la roue avant 9 de ce cycle 1 est engagée dans la fente 14, dans le sens 15, jusqu'à ce que la fourche 8 jouxte les chants arrières 16 des joues 13, et alors que ce cycle 1 occupe une position correspondant au moins approximativement à sa position de circulation en ligne droite, l'ensemble formé par le bras 22 et les barres 25 puisse reposer librement sur le cycle 1 dans des conditions telles que : - le bras 22, orienté horizontalement en formant quelques degrés d'angle par rapport à l'horizontale, dans un sens ou dans l'autre, à partir de l'axe 20, chevauche le guidon 7 et les branches 25 soient situées en arrière de ce dernier et, selon la conformation du cycle 1, viennent s'emboîter de haut en bas soit sur le cadre 3, immédiatement en arrière du tube de direction 4, comme c'est le cas dans l'exemple illustré dans lequel le tube supérieur 6 du cadre 3 est engagé à l'intérieur de la fourchette 26 dont les branches 25 lui offrent ainsi une butée d'arrêt à l'encontre d'un basculement du cycle 1 vers la gauche ou vers la droite, soit sur la potence 10 raccordant le guidon 7 à la fourche 8, de façon non illustrée mais aisément compréhensible par un Homme du métier, également dans des conditions offrant une butée bilatérale, et que
- soit la fourchette 26 ainsi emboîtée prenne appui vers le bas sur le cadre 3 ou la potence 10 du guidon7, respectivement, de façon non illustrée mais aisément compréhensible par un Homme du métier, soit le bras 22 lui-même s'appuie vers le bas sur le guidon 7, ou sur la potence 10 de celui-ci suivant le plan 11, entre la fourchette 26 et l'axe 20, comme il est illustré, ce qui offre dans tous les cas au cycle 1 une butée vers le haut.

Cette position du bras 22, qui peut correspondre à des orientations différentes de celui-ci autour de l'axe 20 en fonction de la conformation du cycle, constitue une position d'immobilisation de celui-ci par rapport au dispositif selon l'invention 2 mais, à partir de cette position, on peut relever l'extrémité libre 24 du bras 22 par basculement de celui-ci vers le haut autour de l'axe 20 jusqu'à dégager intégralement le cadre 3, la potence 10 et le guidon 7 au moins vers l'arrière, comme on l'a illustré en trait mixte à la figure 1, ce qui correspond à une position de libération du cycle par rapport au dispositif selon l'invention 2, c'est-à-dire à une position autorisant l'extraction de la roue avant 9 hors de la fente 14 par roulement du cycle vers l'arrière sur le sol, ainsi qu'à une position dans laquelle on place le bras 22 et la fourchette 26 pour introduire la roue avant 9 dans la fente 14 lors de l'opération inverse de mise en place du cycle 1, par roulement dans le sens 15, dans le dispositif selon l'invention 2 préalablement à son immobilisation au moyen de celui-ci.

On a obtenu de bons résultats aux essais donnant au bras 22, entre les barres 25 et l'axe 20, lui-même directement adjacent au poteau 2, une longueur de l'ordre de 70 cm et aux branches 25, à partir de leur raccordement respectif au bras 22, une longueur de l'ordre de 40 cm, mais ces chiffres ne sont indiqués qu'à titre d'exemple non limitatif et d'autres chiffres pourraient être choisis sans que l'on sorte pour autant du cadre de la présente invention.

Naturellement, celui-ci n'assure un effet antivol qu'à la condition de verrouiller l'ensemble formé par le bras 22 et la fourchette 26, par rapport aux joues 13, dans la position d'immobilisation du cycle, quelle que soit la conformation de celui-ci dans la gamme indiquée précédemment.

A cet effet, de façon non illustrée, on peut prévoir des moyens permettant d'assurer un verrouillage dans toute orientation du bras 22 susceptible de correspondre à l'immobilisation d'un cycle, sans discontinuité, par exemple par action au niveau du pivot 21, ou encore des moyens permettant d'assurer un verrouillage selon un certain nombre d'orientations déterminées, discrètes, du bras 22, ce qui s'est révélé suffisant aux essais. C'est précisément le cas dans l'exemple préféré illustré, où l'on prévoit à cet effet des dispositions permettant en outre d'utiliser des antivols de type connu, amenés et repris par l'utilisateur du cycle 1 lorsqu'il met en place celui-ci dans le dispositif selon l'invention 2 ou le reprend.

Plus précisément, dans l'exemple illustré, le bras 22 porte de façon solidaire, entre la fourchette 26 et l'axe 20 et plus précisément dans une zone choisie telle qu'elle se situe en avant du guidon 7 quel que soit le cycle 1 considéré, en position d'immobilisation de celui-ci, un étrier 27 comportant deux branches 28 mutuellement symétriques par rapport au plan 11, pour l'essentiel plates et mutuellement parallèles en étant mutuellement espacées, perpendiculairement au plan 11, d'une distance légèrement supérieure à l'encombrement maximal hors tout des joues 13 perpendiculairement à ce plan, de telle sorte que l'étrier 27 chevauche les joues 13 et présente une branche 28 le long de chacune d'elles, à l'extérieur de la fente 14, au moins dans toute orientation du bras 22 correspondant à une position d'immobilisation d'un cycle. Ainsi, en particulier, dans toute orientation du bras 22 correspondant à une position d'immobilisation d'un cycle, chaque branche 28 de l'étrier 27 présente une extrémité inférieure libre 29 longeant une joue 13 directement voisine, à l'extérieur de la fente 14, s'étend avec la configuration précitée jusqu'à un niveau supérieur à celui du chant supérieur 17 de la joue 13 puis s'infléchit vers le plan 11 pour se raccorder solidairement au tube 22 par une extrémité supérieure 30, de préférence par soudure lorsque, comme il est préféré, les branches 28 de l'étrier 27 sont métalliques comme le tube 22.

Les extrémités inférieures 29 des deux branches 28 sont percées de part en part, suivant un même axe 31 parallèle à l'axe 20, d'un trou respectif 32 par exemple cylindrique de révolution autour de l'axe 31 avec un diamètre supérieur à celui de la section de tout antivol connu dans le domaine des cycles, et par exemple de l'anse rigide en U 42, formée de deux parties rectilignes 39 mutuellement parallèles, raccordées par une partie hémicirculaire 40, d'un cadenas antivol 33 comportant en outre, de façon connue, un corps rigide 34 susceptible, par actionnement d'une serrure qu'il contient au moyen d'une clé 35, d'être soit mis en prise avec l'anse 42 pour la fermer comme on l'a illustré en trait plein à la figure 2, soit détaché de cette anse 42 pour l'ouvrir comme on l'a illustré en trait mixte à cette même figure. De tels cadenas sont bien connus d'un Homme du métier et ne nécessitent pas davantage de description.

Suivant des axes respectifs 36 parallèles à l'axe 20, disposés selon un même cylindre de révolution autour de cet axe 20 et incluant également l'axe 31, et équidistants angulairement autour de l'axe 20, les joues 13 sont elles-mêmes percées de plusieurs paires de trous 37 identiques aux trous 32 qui peuvent être ainsi placés en relation de coaxialité au moins approximative avec chaque paire de trous 37 des joues 13, sélectivement, en fonction de l'orientation du bras 22 par pivotement autour de l'axe 20 en position d'immobilisation du cycle 1, c'est-à-dire de façon adaptée à la conformation du cycle 1 immobilisé par la fourchette 26 et le bras 22.

Dans l'exemple illustré, on a ainsi prévu quatre paires de trous 37, répartis sur environ 20° d'angle autour de l'axe 20 et présentant, comme les trous 32, un diamètre de l'ordre de centimètres, ce qui a permis de répondre à une large gamme de conformations de cycles, mais cet exemple n'est nullement limitatif et l'on pourrait choisir des nombres et répartitions différents de paires de trous 37, ainsi que des diamètres différents des trous 32 et 37.

La distance entre les axes 36 de deux paires de trous 37 voisines est choisie de façon à être compatible avec l'utilisation du cadenas 33. Dans l'exemple illustré, elle est sensiblement voisine de la moitié de la distance séparant des axes respectifs 38 des deux parties rectilignes 39 de l'anse 42 afin de permettre, compte tenu en outre de ce que le diamètre des trous 32 et 37 est supérieur à celui des parties rectilignes 39 de l'anse 42, d'engager les deux parties rectilignes 39 de celle-ci dans deux paires de trous 37 non consécutives, en même temps que l'une de ces parties rectilignes 39 s'engage dans les deux trous 32, la partie hémicirculaire 40 de l'anse 42 étant située d'un côté de l'étrier 27 et de l'ensemble formé par les deux joues 13, à l'extérieur de la fente 14, alors que le corps 34 peuvent être mis en place de l'autre côté.

Naturellement, l'utilisation d'un antivol à câble ou à chaine est également possible.

Entre les joues 13, l'antivol, à savoir dans cet exemple chaque partie rectiligne 39 de l'anse 42 de l'antivol 33, traverse la fente 14 de part en part et s'engage entre deux rayons 41 de la roue 9 grâce à un positionnement approprié des paires de trous 37, relevant des aptitudes normales d'un Homme du métier, ce qui permet, au moyen d'un seul et même antivol tel que l'antivol 33, à la fois de verrouiller le bras 22 et la fourchette 26 dans la position d'immobilisation du cycle 1 et d'assurer une liaison traditionnelle, par antivol, entre la roue avant 9 de celui-ci et les joues 13 du dispositif selon l'invention 2.

L'utilisation d'un dispositif selon l'invention 2 ainsi conçu est particulièrement simple.

Lorsque le dispositif est inutilisé, le bras 22 repose par l'intermédiaire des branches 28 de l'étrier 27 sur les chants supérieurs 17 des joues 13, et présente une orientation descendante à partir de l'axe 20 d'articulation sur la chape 19.

Lorsqu'un cycliste, cyclomotoriste ou vélomotoriste veut l'utiliser, il approche son cycle dans le sens 15, en le faisant rouler sur le sol 43 en position de circulation en ligne droite et en faisant coïncider son plan moyen 11 avec le plan moyen de la fente 13, puis soulève le bras 22 pour l'amener en position de libération, afin de dégager le passage notamment pour le guidon 7, et poursuit le roulement du cycle 1 sur le sol 43 jusqu'à ce que sa roue 9 soit engagée suffisamment, dans la fente 14, pour que la fourche 8 jouxte le chant arrière 16 des joues 13. Le cycle 1 occupe alors par rapport au dispositif 2 une position compatible avec le rabattement du bras 22, dont le cycliste, cyclomotoriste ou vélomotoriste abaisse alors l'extrémité libre 24 jusqu'à ce que la fourchette 26 de celle-ci, alors placée en arrière du guidon 7, vienne chevaucher le cadre 3, par exemple par un tube supérieur 6 de celui-ci comme il est illustré, ou la potence 10 assurant la liaison du guidon 7 avec la fourche 8 et que soit la fourchette 26, soit le bras 22 vienne buter vers le bas contre un composant du cycle, qui peut être le cadre 3, et notamment le tube supérieur 6 de celui-ci, ou la potence 10 de liaison entre le guidon 7 et la fourche 8 en ce qui concerne la fourchette 26 ou bien le guidon 7, ou la partie de la potence 10 qui lui correspond, en ce qui concerne le tube 22, comme on l'a illustré. Les trous 32 des extrémités inférieures 29 des branches 28 de l'étrier coïncident alors au moins approximativement avec l'une des paires de trous 37 et soit directement, soit après avoir légèrement modifié l'orientation du bras 22 pour améliorer cette coïncidence, on introduit dans les paires de trous ainsi alignées au moins approximativement un antivol et par exemple l'une des parties rectilignes 39 de l'anse 42 d'un cadenas 33, dont on a au préalable démonté le barreau 34. Simultanément, lorsqu'on utilise un tel cadenas, l'autre partie rectiligne 39 de l'anse 42 s'engage dans une autre paire de trous 37 des joues 13 et, à l'intérieur de la fente 14, les deux parties rectilignes 39 s'engagent entre les rayons 41 de la roue 9. Lorsque les parties rectilignes 39 de l'anse 42 ont été engagées suffisamment et dépassent de l'autre côté, c'est-à-dire sont placées en porte-à-faux par rapport à la joue 13 et à la branche 28 opposées à celles qui correspondent à sa partie hémicirculaire 40, on met en place et l'on verrouille le corps 34 sur l'anse 42. Le cycle 1 est alors immobilisé dans des conditions rendant son vol beaucoup plus difficiles. La libération du cycle 1, ensuite, s'effectue par l'enchaînement inverse des opérations après que l'on ait séparé le corps 34 de l'anse 42 du cadenas 33.

Lorsqu'on utilise un antivol à lien souple, à savoir à câble ou chaîne, on engage une partie de ce lien dans les trous 32 et 37 mutuellement alignés en formant une boucle, analogue à la partie courbe 40 de l'anse 42, d'un côté de l'ensemble formé par les branches 28 de l'étrier 27 et les joues 13 et l'on peut avantageusement engager une autre partie de ce lien dans une autre paire de trous 37 pour fermer l'antivol de l'autre côté de l'ensemble formé par les branches 28 et les joues 13, ou encore engager cette autre partie entre les rayons 41 de la roue 6, ou autour du cadre 3, à l'extérieur de la fente 14 avant de former l'antivol ; dans l'un et l'autre cas, un seul et même antivol assure à la fois la retenue du bras 22 dans la position d'immobilisation du cycle 1 et l'action directe de liaison de celui-ci, au moins en ce qui concerne sa roue avant 9, avec les joues 13 du dispositif selon l'invention 2.

Un Homme du métier comprendra aisément que le mode de mise en oeuvre de l'invention qui vient d'être décrit ne constitue qu'un exemple non limitatif par rapport auquel on pourra prévoir de nombreuses variantes sans sortir pour autant du cadre de la présente invention.

## Revendications

1. Dispositif de garage pour un cycle (1) reposant sur le sol (43) dans une position déterminée correspondant au moins approximativement à une position de circulation en ligne droite, ledit dispositif (2) comportant :
- deux joues (13) plates, verticales, solidaires du sol (43) ou susceptibles d'en être rendues solidaires et définissant entre elles une fente (14) présentant un plan moyen (11) vertical pour recevoir une partie antérieure de la roue avant (9) du cycle (1) occupant ladite position déterminée, et
- une fourchette (26) montée mobile par rapport aux joues (13) entre au moins une position d'immobilisation du cycle (1), dans laquelle elle est tournée vers le bas et symétrique par rapport au plan moyen (11) de façon à pouvoir s'emboîter de haut en bas sur le cadre (3) du cycle (1), directement en arrière du tube de direction, ou sur la potence (10) du guidon (7), en arrière de celui-ci, en offrant au cycle (1) une butée bilatérale alors que le cycle (1) occupe ladite position déterminée, et une position de libération du cycle (1), dans laquelle elle est suffisamment décalée vers le haut, par rapport à la position d'immobilisation, pour dégager le cycle (1) au moins vers l'arrière,
caractérisé en ce qu'il comporte en outre des moyens (27, 32, 37) de verrouillage déverrouillable de la fourchette (26) par rapport aux joues (13) dans la position d'immobilisation du cycle (1), de telle sorte que la fourchette (26) offre au cycle (1) une butée également vers le haut dans cette position d'immobilisation du cycle (1).

2. Dispositif selon la revendication 1, caractérisé en ce que la fourchette (26) est articulée par rapport aux joues (13), entre ses positions d'immobilisation et de libération du cycle (1), autour d'un axe d'articulation qui est perpendiculaire au plan moyen (11).

3. Dispositif selon la revendication 2, caractérisé en ce que ledit axe d'articulation (20) est décalé vers l'avant par rapport à la fourchette (26), en position d'immobilisation du cycle (1), et en ce que la fourchette (26) est solidaire d'un bras (22) disposé selon le plan moyen (11), susceptible de chevaucher le guidon (7) du cycle (1) occupant ladite position déterminée, en position d'immobilisation du cycle (1), et articulé autour dudit axe d'articulation (20) par rapport aux joues (13) entre une position haute de la fourchette (26) et au moins une position basse de la fourchette (26), définissant respectivement lesdites positions de libération et d'immobilisation.

4. Disposition selon l'une quelconque des revendications 2 et 3, caractérisé en ce que les moyens (27, 32, 37) de verrouillage comportent un étrier (27) solidaire de la fourchette, (26) comportant deux branches (28) mutuellement symétriques par rapport audit plan moyen (11) de façon que l'étrier puisse chevaucher les joues (13), par l'extérieur de la fente (14), dans la position d'immobiliation, chaque branche (28) étant percée d'un trou (32) et les trous (32) des deux branches (28) étant placés suivant un même axe (31) perpendiculaire audit plan moyen (11) et sécant des joues (13) dans la position d'immobilisation, et au moins une paire de trous (37) aménagés respectivement dans l'une et l'autre joues (13), suivant un même axe (36) perpendiculaire audit plan moyen (11), sécant de la fente et avec lequel l'axe des trous (32) des branches (28) coïncide au moins approximativement en position d'immobilisation, de telle sorte que l'on puisse engager un antivol (33) de type connu à travers la fente (14), entre les rayons (41) de la roue avant (9) du cycle (1), par lesdits trous (32, 37) au moins approximativement coaxiaux en position d'immobilisation.

5. Dispositif selon la revendication 4 en combinaison avec la revendication 3, caractérisé en ce que l'étrier (27) est monté sur le bras (22), entre la fourchette (26) et l'axe d'articulation (20).

6. Dispositif selon l'une quelconque des revendications 4 et 5, caractérisé en ce que les joues (13) portent au moins deux desdites paires de trous (37).

7. Dispositif selon l'une quelconque des revendications 1 à 6, caractérisé en ce que la fourchette (26) est susceptible d'occuper par rapport aux joues (13) plusieurs positions d'immobilisation d'un cycle (1), adaptées à des cycles (1) de forme et/ou taille différentes, et en ce que les moyens (27, 32, 37) de verrouillage déverrouillable de la fourche (26) sont susceptibles de verrouiller celle-ci par rapport aux joues (13) dans chacune de ses positions d'immobilisation d'un cycle (1).

8. Dispositif selon la revendication 7 en combinaison avec la revendication 6, caractérisé en ce que les axes (36) respectifs desdites paires de trous (37) des joues (13) sont placés sur un cylindre de révolution autour de l'axe d'articulation (20).

9. Dispositif selon la revendication 8, caractérisé en ce que lesdites paires de trous (37) des joues (13) sont équidistantes angulairement autour de l'axe d'articulation (20).
